# EUROPEAN PATENT APPLICATION

(11) **EP 2 711 396 A1**
(43) Date of publication of application: **26.03.2014**
(21) Application number: 12185087.9
(22) Date of filing: 19.09.2012
(51) Int. Cl.: C08L 97/00, C08L 97/02

(54) **Copolymerizable lignin derivatives**

(71) Applicant: Annikki GmbH, 8020 Graz (AT)
(72) Inventor: Slugovc, Christian, 9020 Klagenfurt (AT); Strasser, Simone, 8563 Ligist (AT)
(74) Representative: Schwarz & Partner

(57) **Abstract**

Method of functionalizing lignin, comprising subjecting lignin to reaction with a compound which enables the introduction of at least one, non-aromatic C-C double bond into the lignin; and an aliphatic carbon chain comprising 8 to 22 carbon atomes; the use of such lignin for (co)polymerisation, functionalized lignin and (co)plolymer obtained or obtainable by such method, useful as plastic-like fabrics.

## Description

The present invention relates to lignin derivatives appropriate for copolymerization and copolymerized lignin.

In connection with the shortage of crude oil, the renewable resource lignocellulose (straw, wood, paper waste, etc.) has been gaining more and more importance as a starting material for chemical products and fuels. Lignocellulose consists of the ultra-structurally cross-linked polymeric main components cellulose, hemicellulose and lignin, frequently accounting for about 85 - 90 % of the raw material. The remaining amount may be summarized under the term extract materials.

The degradation of the components present as polymers and the separation thereof into individual product flows as well as the further processing thereof into high-order products is the task of biorefineries. Regarding liognocellulosic material, apart from the usefulness of the cellulosic portion thereof, also the amount and the quality of lignin exert a strong influence on the value creation of the entire degradation process.

Numerous processes for providing lignin from lignocellulosic material are known. In general lignin is obtained from bioorganic material via pulping processes which degrade bonds between the cellulosic material and lignin.

Lignin is steadily gaining economic importance as a substitute for petrochemically produced aromatics and is the second most abundant naturally occurring biopolymer, available as (waste) product from various pulping processes of plant feed stocks and hence a valuable renewable resource. Despite its widespread availability, high-value industrial applications of lignin are still hardly established. A reason for this may be the complex structure of lignin which varies according to type, origin and age of the plant from which the lignin originates.

From EP 2,223 928 functionalized lignin is known which is described to be useful as an additive to rubber compositions.

Now surprisingly a method has been found which enables further processing of lignin obtainable from lignocellulosic material into valueable and highly useful products.

In one aspect the present invention provides a method functionalizing lignin, comprising subjecting lignin to reaction with a compound which enables the introduction of at least one, non-aromatic C-C double bond into the lignin, especially into a monomeric sub-unit of the lignin, wherein beside at least one non-aromatic C-C double bond an aliphatic moiety comprising 8 to 22 carbon atoms particularly of 11 to 22 carbon atoms, is introduced into the lignin, in particular wherein an aliphatic moiety is derived from an aliphatic compound comprising an appropriate functional group for the esterification of free hydroxy groups of the lignin, especially a saturated or unsaturated fatty acid of 8 to 22, particularly of 11 to 22 carbon atoms.

A method provided by the present invention is hereinafter designated as "a method of (according) to the present invention.

The number of unsaturated residues introduced in lignin is, if functionalization is complete, equal to the number of total hydroxyl groups in lignin (expressed in mmol/g lignin). In a method of (according) to the present invention the number of introduced unsaturated residues in lignin will be in a range of 10 to 100 percent of the number of total hydroxy groups present in the lignin (expressed in mmol/g lignin) before introduction of the non-aromatic C-C double bond.

Lignin which may be used in a method of the present invention includes lignin comprising monomeric units (subunits) of formula 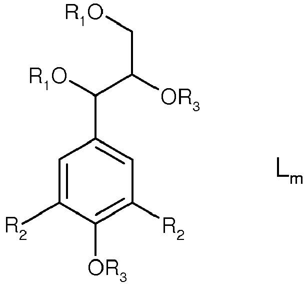 wherein
R₁ is H,
R₂ is H, OCH₃ or another lignin subunit, and
R₃ is H, or another lignin subunit,
and having a molecular weight which is dependent on the extent of degradation during pulping, e.g. and further processing after pulping; and having preferably β-O-4 interunit linkages which type of interunit linkage results in the highest possible number of free hydroxy groups in lignin. Such lignin may be obtained from pulping processes wherein lignocellulosic material is degraded.

Lignin may be obtained from pulping processes wherein lignocellulosic material is degraded. Preferred lignin for functionalization according to the present invention is lignin obtained according to a method as described in WO 2012/027767, namely by pulping lignocellulosic material with alcohol, water and a base, at a temperature below 100°C, wherein 3 to 12 parts of base are used per 100 parts of the dry lignocellulosic material to be pulped are used. Optionally, the alcohol in the pulping liquid is present in an amount of 70% v/v bis 95% v/v and a pH of 12 to 14 is adjusted. Lignin obtained by such process may still be subjected to further processing, e.g. to protease treatment and/or to nanofiltration, wherein an enriched lignin solution may be obtained in the retentate, whereas in the permeate the lignin content is diminished.

As lignocellulosic material there may be used organic material containing lignin, preferably annual plants such as (dry) grasses, or parts of grasses or hardwood, preferably grasses, straw, energy crops such as switch grass, elephant grass or abaca, sisal, bagasse, or untypical lignocellulose substrates such as glumes, i.e., lemmas such as husk rice, preferably straw, energy crops, bagasse or glumes, in particular preferably straw or bagasse, e.g. straw such as wheat straw.

In another aspect the present invention provides a method according to the present invention, wherein the lignin for functionalization is obtainable (obtained) from lignocellulosic material
(i) by pulping lignocellulosid material with alcohol, water and a base, at a temperature below 100°C, wherein 3 to 12 parts of base are used per 100 parts of the dry lignocellulosic material to be pulped, to obtain lignin in solution, optionally wherein the alcohol in the pulping liquid is present in an amount of 70% v/v to 95% v/v and a pH of 12 to 14 is adjusted,
(ii)- optionally subjecting lignin obtained by the pulping process to protease treatment, and optionally separating the cleavage products of protease treatment from the lignin solution,
(iii) optionally subjecting the aqueous, alcoholic solution obtained in any of (i) or (ii) to nanofiltration, optionally via a polyamide membrane, or a membrane comprising polyamide, to obtain a retentate which is a solution enriched with lignin, compared with the permeate, wherein lignin is diminished.

Pulping according to step (i) may be carried out according to a method as described in WO 2012/027767.

If in step (i) the alcohol, in particular a C₁₋₄ alcohol, such as ethanol or isopropanol in the pulping liquid is present in an amount of 70% v/v to 95% v/v, such as 75% v/v to 85% v/v, and a pH of 12 to 14 is adjusted, it was found that low molecular lignin (NML) may be obtained from the lignocellulosic material. E.g., it was found that, if wheat straw is treated in aqueous, alcoholic solution at a temperature below 70°C and a pH of ca. 13, then ca. 16% of the NML (related to the total lignin) may be extracted already after 30 minutes, if the alcohol content in the aqueous solution is 80% v/v. If the alcohol content is enhanced at such conditions to over 85% the amount of extractable NML diminishes. The lignin thus obtained surprisingly shows a rather low molecular weight (Mw 1340, Mn 850) with a rather narrow molecular weight distribution (Pd 1,58). A first aqueous solution of NML thus obtained may be used to treat further lignocellulosic material, e.g. lignocellulose, in order to enrich NML in that solution (recyclization).

Lignin obtained by the pulping process optionally may be subjected to treatment with protease enzyme, whereby the mol mass of the lignin is significantly decreased. An appropriate protease enzyme e.g. includes protease-enzymes from the protease from *Streptomyces griseus* (pronase, EC 3.4.24.31), from the protease from *Bacillus licheniformis* (EC 3.4.21.62), from protease from *Staphylococcus aureus* (EC 3.4.21.19), trypsin, pepsin, bromelain und papain, e.g. including a mixture from different protease enzymes, e.g. such as described above. It was surprisingly found that lignin obtained after the treatment with protease exhibits an increased reactivity compared with the untreated lignin. E.g. the velocity of polymerization and/or the degree of polymerization may be improved; e.g. in oxidative polymerziation, e.g. polymerization with phenoloxidating enzymes, such as Laccase.

For protease treatment lignin obtained from a pulping process is dissolved in a buffer solution, e.g. tris-buffer, at basic pH, e.g. from 8 to 9, such as around pH 8,5 and treated with a protease, e.g. a protease from *Streptomyces griseus* (Sigma P5147) with 0,1 mg protease from *Streptomyces griseus* (Sigma P5147) and the mixture obtained is stirred at slightly elevated temperatures, e.g. 30°C to 50°C, such as around 37°C, for an appropriate period, e.g. for 1 to 24 hours. Alternatively protease from *Bacillus licheniformis* (Sigma P5380), trpysin or a mixture from (such) proteases may be used.The pH of the solution obtained is adjusted to 12, e.g. by use of a base. E.g. a hydroxide, such as sodium hydroxide and the lignin obtained is isolated. It was found that such protease treatment resulted in a significant decrease ot the mol mass of the lignin, e.g. from original ca. 16,000 Da to ca. 6,000 Da which mol mass-decreased lignin showed improved polymerization behaviour.

The alcoholic alkaline lignin solution obtained in any of (i) or (ii) may be subjected to nanofiltration, optionally via a polyamide membrane, or a membrane comprising polyamide, to obtain a retentate which is an aqueous solution enriched with lignin, compared with the permeate, wherein lignin in aqueous solution is diminished.

For nanofiltration preferably a pH of 8 to 14, sujch as 10 to 14, e.g. 11 to 13 is adjusted in the solution. The alcohol content of the alcoholic alkaline lignin solution preferably is 20 to 90%, such as 40 to 70%, e.g. around 60% by weight. The temperature of the alcoholic alkaline lignin solution is from 20°C to 70°C, e.g. 30°C to 60°C, preferably 40°C to 50°C. Appropriate membranes for nanofiltration are known and e.g. include membranes from polyamide on polysulfone, polyamide thin film composite on polyester, polyamide on polypropylene, polyimide, "proprietary thin film", polysulfone, polyethersulphone on polyethylene. Before nanofiltration the lignin in the solution optionally may be concentrated by appropriate means,
- e.g. a recyclization step, which means using in a pulping process of lignocellulosic material an alkaline alcoholic solution which was previously used already in a pulping step and thus contains already lignin, or
- by ultrafitration, e.g. using membranes from polysulphone, polysulphone/ PES on polypropylene (PP), polysulphone/PES on polyester, polyethersulfone (PES), PES H on polyethylene (PE)/PP as an ultrafiltration membrane.

"Functionalizing or functionlized lignin" according to the present invention means that the at least one hydroxy group in a monomeric lignin sub-unit is reacted with a compound which introduces at least one, non-aromatic C-C double bond into the lignin, and optionally, beside the C-C double bond an aliphatic carbon chain comprising 9 to 20 carbon atomes. Such lignin is novel and also form spart of the present invention.

Preferred lignin used in a process of the present invention has a average molecular weight (M_{w}) of 500 - 7000 g/mol, preferably 1500 - 2500 g/mol, e.g. (around) 2000 g/mol and is assumed to comprise the native structure of lignin, hardly altered, or not altered through the pulping conditions.

In another aspect the present invention provides a functionalized lignin suitable for copolymerization with appropriate monomers via ring opening metathesis polymerization, wherein at least one aliphatic moiety comprising 8 to 22, e.e. 11 to 22 carbon atoms and at least one non-aromatic C-C double bond is introduced into the lignin, optionally obtainable or obtained according to a method of of the present invention,
e.g. wherein the aliphatic moiety is derived from a long-chain aliphatic compound, especially a saturated or unsaturated fatty acid of 8 to 22, particularly of 11 to 22 carbon atoms,
e.g. wherein the aliphatic moiety is derived from an aliphatic compound comprising an appropriate functional group for the esterification of free hydroxy groups of the lignin.

Functionalized lignin provided by the present invention is designated herein also as "functionalized lignin of (according to) the present invention".

In a functionalized lignin according to the present invention, beside at least one non-aromatic C-C double bond an aliphatic carbon chain comprising 8 to 22 carbon atomes, preferably 11 to 22 carbon atoms, is introduced into the lignin.

A compound which enables the introduction of at least one, non-aromatic C-C double bond into the lignin the lignin is an aliphatic compound comprising a functional group which is appropriate for a binding reaction with a reactive group of the the lignin, e.g. a halogenide such as Cl, Br, and comprising at least one non aromatic C-C double bond, especially a long-chain aliphatic compound, especially an unsaturated fatty acid, especially of 8 to 22, such as of 11 to 22 carbon atoms.

The reactive group of the lignin for functionalizing comprises hydroxy groups, especially one or more free hydroxy groups, e.g. at the phenyl group, and/or at alkyl attached to a pheyl group in lignin monomeric sub-units, e.g. of formula Lₘ.

Preferably the compound for introducing at least one non aromatic C-C double bond, and optionally an aliphatic carbon chain comprising 8 to 22 carbon atoms comprises a (carboxylic acid) halogenide or an anhydride as the functional group for reaction with the lignin.

Non-aromatic C-C double bond introduced into the lignin are groups which are appropriate for (co)polymerization of the lignin.

In a preferred aspect functionalized lignin carries groups appropriate for copolymerization, namely a group comprising at least one aliphatic C-C double bond. In another preferred aspect a functionalized lignin of the present invention is soluble in non-polar media. It was found surprisingly according to the present invention that solubility in non-polar media (solvent) of a functionalized lignin of the present invention is achieved by introduction of at least one aliphatic carbon chain comprising 8 to 22, such as 11 to 22 carbon atoms into the lignin, e.g. into a a monomeric sub unit of the lignin.

The number of residues introduced in lignin is, if functionalization is complete, equal to the number of total hydroxyl groups in lignin (expressed in mmol/g lignin). In a process of the present invention the number of intruduced substituents in lignin will be in a range of 10 to 100 percent of the number of total hydroxyl groups present in the lignin (expressed in mmol/g lignin).

Such aliphatic carbon chain may be introduced in a method according to the present invention into the lignin either simultaneously with the at least one non aromatic C-C double bond, or separately, preferably simultaneously. Two different compounds for introduction may be used. E.g. one compound having at least one non aromatic C-C double bond and a functional group for reacting with the lignin, e.g. for reaction with a (phenolic) hydroxy group of the lignin, such as a (carboxylic acid) halogenide, or an carboxylic acid anhydride and a second compound, having an aliphatic carbon chain comprising 8 to 22 carbon atoms and a functional group for reacting with the lignin, e.g. for reaction with a (phenolic) hydroxy group of the lignin, such as a (carboxylic acid) halogenide, or an carboxylic acid anhydride, may be reacted with lignin; either simultaneously, or in two different reaction steps. Preferably the compound which is used for functionalization comprises both, at least one non-aromatic C-C double bond and an aliphatic carbon chain comprising 8 to 22 carbon atoms.

A preferred monomeric sub-unit of a functionalized lignin of the present invention is of formula 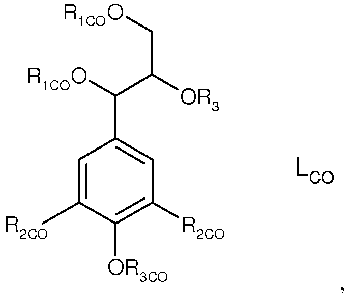 wherein
R_{1CO} is hydrogen or a group of formula 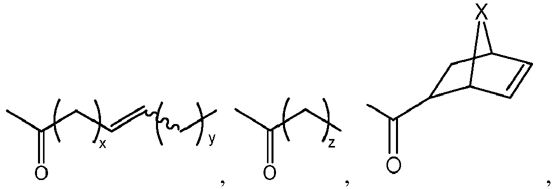 R_{2CO} is H, OCH₃ or another lignin subunit,
R_{3CO} is H, or another lignin subunit,
X is CH₂ or O, or C=C(CH₃)₂,
x is 1 to (at least) 19,
y is 0 to (at least) 19, and
z is 0 to (at least) 19, with the proviso that
x plus y are (at least) 19.

A functionalized lignin of the present invention, e.g. obtainable or obtained according to a method of the present invention, is e.g. useful for the preparation of plastic fabrics. For that a functionalized lignin of the present invention may be subjected to (co)ploymerization.

In another aspect the present invention provides a the use of a functionalized lignin according to the present invention for polymerization, specifically for copolymerization, e.g. for the preparation of plastic-like fabrics.

A (co)polymer provided by the present invention is herein also designated as "a (co)polymer of (according to) the present invention".

(Co)polymerization of a functionalized lignin according to the present invention may be carried out as appropriate, e.g. analogously to a method as conventional, and is preferably carried out via a ring opening metathesis polymerization.

In another aspect the present invention provides the use of a functionalized lignin according to the present invention for (co)polymerization, wherein (co)polymerization is a ring opening metathesis (co)polymerization.

The principles of ring opening metathesis polymerization (ROMP) are well known and established, e.g. A. Leitgeb, J. Wappel and C. Slugovc, Polymer 2010, 51, 2927 provides a detailed description. That type of polymerization includes the reaction of a substrate to be polymerized with a cyclic monomeric compound comprising at least one aliphatic C-C double bond under catalysis. During the reaction the ring of the cyclic compound is opened at the double bond and and a compound having two terminal double bonds is resulting, which double bonds may react with reactive groups of the substrate, in the present case may react with functionalized lignin of the present invention.

In one preferred embodiment of the present invention such cyclic monomeric compound comprising at least one double bond is selected from
- a cyclic alkene or a cyclic heteroalkene, e.g. of formula 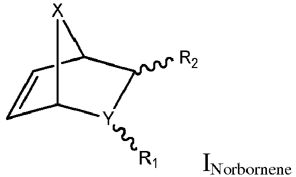 wherein
   X is CH₂, C=C(CH₃)₂ or O,
   Y is CHR₂, or NR₃,
   R₁ and R₂ independently of each other are H, O(CH₂)ₙCH₃, C(O)(CH₂)ₙCH₃, C(O)O(CH₂)ₙCH₃, (CH₂)ₙCH₃, (CH₂)ₙCH=CH(CH₂)ₘCH₃,
   R₃ is CH₂-phenyl, (CH₂)ₙCH₃ or (CH₂)ₙCH=CH(CH₂)ₘCH₃),
   with the proviso that R₂ is different from R₃,
   and
   n and m are 0 to20, or
- a cyclic diene, such as a dicyclopentadiene, e.g. an *endo*-dicyclopentadiene of formula

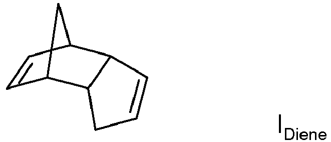

In another aspect the present provides the use of a functionalized lignin comprising monomeric sub-units of formula L_{CO}, wherein R_{1CO}, R_{2CO}, R_{3CO}, X, x, y and z are as defined above, for a ring opening metathesis (co)polymerization with a monomer of formula I_{Norbornene}, wherein X, R₁, R₂, m and n are as defined above, or with a monomer of formula I_{Diene}, preferably with a monomer of formula I_{Diene};
and in a further aspect

A (co)plymer obtainable, e.g. obtained, by (co)polymerization of a functionalized lignin of the present invention, e.g. via ring opening metathesis (co)polymerization, e.g. a (co)polymer wherein a functionalized lignin of the present invention is reacted via ring opening metathesis (co)polymerization; with a cyclic monomeric alkene, especially a cyclic alkene, heteroalkene, or diene, e.g. a compound of formula I_{Norbornene}, wherein the residues are as defined above, or a compound of formula I_{Diene} preferably a compound of formula I_{Diene}.

A polymer of the present inventiton preferably is a copolymer of a fuctionalized lignin of the present invention.

In a preferred aspect a copolymer of the present invention is obtainable or obtained by subjecting a functionalized lignin comprising momomeric sub-units of formula L_{CO}, wherein R_{1CO}, R_{2CO}, R_{3CO}, X, x, y and z are as defined above, to ring opening metathesis copolymerization with a monomer of formula I_{Norbornene}, wherein the residues are as defined above, or a compound of formula I_{Diene} preferably a compound of formula I_{Diene.}.

Ring opening metathesis (co)polymerization of the present invention may be carried out as appropriate, e.g. analogously to a method as conventional, e.g. or as described herein.

In a preferred embodiment of the present invention a coplymer of the present invention is prepared by dissolving a functionaliized ligning of the present invention in liquid *endo-*dicyclopentadiene and an appropriate catalyst (initiator), e.g. a catalyst (initiator) as conventional in ROMP, such as a ruthenium catalyst (initiator), e.g. a ruthenium carbene complex, e.g. a commercially available ruthenium catalyst (initiator); e.g. Umicore M2^{®} ([1,3-bis(2,4,6-trimethylphenyl)-2-imidazolidinylidene]dichloro-(3-phenyl-1H-inden-1-ylidene)(tricyclo-hexylphosphine)ruthenium(II), CAS Reg.No. 536724-67-1), dissolved in an organic, polar solvent, such as a halogentaed hydrocarbon, e.g. CH₂Cl₂. The components are mixed thoroughly to obtain a solution which is treated at elevated temperatures, e.g. temperatures of 60 to 120°C, e.g. (around) 80°C for several hours.

A coplymer is obtained in a process of the present invention in the form of a plastic-like fabric having surprising characteristics, e.g. being stiff, but not brittle, e.g. having thermoset characteristics.

In another aspect the present invention a coplymer of the present invention is a plastic-like fabric , e.g. being stiff, but not brittle, e.g. having thermoset characteritics.

In the following examples all temperatures are in degree Celsius (°C) and are uncorrected.

"Annikki lignin" is lignin obtained according to a process, where lignocellulosic material, e.g. obtained from wheat straw, is treated with a basic aqueous solution (pH between 10 and 14), containing an C₁₋₄ alcohol at elevated temperatures (50-100°C). High molecular weight lignin (M_{w} ≈ 6000 g/mol) can be isolated as light brown solid of high purity by lowering the pH level of the solution down to 2-5. Low molecular weight lignin (M_{w} ≈ 2000 g/mol) precipitates during the removal of the C₁₋₄ alcohol. In a process according to the present invention, lignin with a weight average molar mass (M_{w}) from 1500 to 2500 g/mol, thus low molecular weight lignin, is preferred.

### Example 1

### Esterification of lignin with

### (a) 10-undecenoyl chloride, and

### (b) oleoyl chloride

### (c) bicyclo[2.2.1]hept-5-en-2-carbonyl chloride/palmitic acid chloride 1:3

See also Y. Xia, R. C. Larock, Polymer Preprints 2010, 51(1), 764-165, F.; and Abdelkafi, H. Ammar, B. Rosseau, M. Tessier, R. El Gharbi, A. Fradet, Biomacromolecules 2011, 12, 3895-3902.

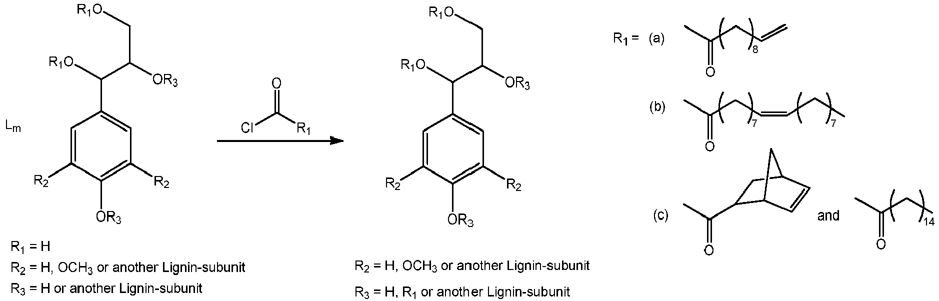

Dried Annikki lignin (kept under vacuo for at least 24 h). (4.2 mmol OH/g, 1 equivalent) was dissolved in N,N-dimethylformamide *abs.* and triethylamine (4.2 mmol, 1 equivalent) was added. The solution obtained was brought to 60°C under inert atmosphere and 1-1.2 equivalents of a carboxylic acid chloride (a) or (b) was added. For preparation of derivative (c) 0.25 equivalents of bicyclo[2.2.1]hept-5-en-2-carbonyl chloride were added and 2 hours later, 0,75 equivalents of palmitic acid chloride.

The mixture obtained was stirred at 60°C for at least 20 hours, quenched with deionized water and extracted several times with dichloromethane. The combined organic phases were concentrated and the remaining brown viscous liquid was dried in vacuum.

When quenching the reaction solution of (c) with deionized water, a precipitate was formed, filtered, washed several times with deionized water and dried under vacuo.

Yields (in % of theory) and characterization data from (ATR)-FT-IR and ¹H,¹³C-HSQC NMR spectroscopy of the different lignin derivatives:
(a) 90 %; brown viscous liquid,
   FT-IR-bands are listed in cm⁻¹: 2925 and 2854 (aliphatic C-H), 1708 (C=O), 1643 (aliphatic C=C), 1462 (-CH₂-), 1417 (C-O), 1130 (aromatic C-H), 908 (aromatic C-H), 732 (aromatic C-H)
   ¹H,¹³C-HSQC-NMR (δ, 20°C, CDCl₃, 300.36 MHz), resonances are listed in ¹H/¹³C ppm: 5.78/139.0 (1H, HC=CH₂) and 4.94/114.2 (2H, HC=CH₂); 3.73/56.0 (3H, OCH₃); 2.34/33.89, 2.03/33.89, 1.62/24.94 and 1.30/29.31 (CH₂-groups of aliphatic chain)
(b) 85 %; brown viscous liquid, (72.1 % C, 10.6 % H, 2.2 % N, 15,1 % O *calculated value*) FT-IR-bands are listed in cm⁻¹: 2922 and 2853 (aliphatic C-H), 1733 (C=O), 1650 and 1613 (aliphatic C=C), 1459 (-CH₂-), 1129 (aromatic C-H), 721 (aromatic C-H) ¹H,¹³C-HSQC-NMR (δ, 20°C, CDCl₃, 300.36 MHz), resonances are listed in ¹H/¹³C ppm: 5.34/129.8 (2H, HC=CH), 3.76/56.0 (3H, OCH₃); 2.32/3.41, 2.00/27.5, 1.62/24.9 and 1.26/29.4 (CH₂-groups of aliphatic chain), 0.88/14.2 (3H, CH₃)
(c) 90 % brown solid ATR-IR-bands are listed in cm⁻¹: 3400 (O-H band)*; 2916 and 2850 (aliphatic C-H), 1703 (C=O); 1505 (-CH₂-), 1595 (aliphatic C=C), 1418 (C-O), 1125 (aromatic C-H), 661 (aromatic C-H)
**remains due to incomplete conversion*
¹H,¹³C-HSQC-NMR (δ, 20°C, CDCl₃, 300.36 MHz), resonances are listed in ¹H/¹³C ppm: 5.34/128.2 (2H, HC=CH); 3.84/56.0 (3H, OCH₃); 2.00/27.6 (1H, CH₂^{norbornene}); 2.30/34.3, 1.60/25.01 and 1.24/29.6 (CH₂-groups of aliphatic chain); 0.86/14.3 (3H, CH₃)

### Example 2

### Ring opening metathesis copolymerization of lignin, which lignin is functionalized (esterified) with oleoyl chloride, with dicyclopentadiene

The formula of a copolymer of the present invention which is shown above is not a structure which is fully confirmed by characterization data but is rather a possible structure resulting when using a functional lignin according to the present invention and an *endo-*dicyclopentadiene as a monomer for copolymerization.

For this ring opening metathesis polymerization of functionalized lignin, prepared according to examples 1a, 1b or 1c, respectively, with dicyclopentadiene a commercially available ruthenium initiator is required as a catalyst. Used was Umicore M2^{®} ([1,3-Bis(2,4,6-trimethylphenyl)-2-imidazolidinylidene]dichloro-(3-phenyl-1H-inden-1-ylidene)(tricyclohexylphosphine)ruthenium(II), CAS Reg.No. 536724-67-1).

Functionalized lignin (20 weight % of the total mixture), prepared as described in examples I (c), was dissolved in neat liquid *endo*-dicyclopentadiene (80 weight % of the total mixture) and the ruthenium initiator (catalyst) (25 ppm, dissolved in toluene) was added. The components were thoroughly mixed and the solution obtained was placed in an oven to cure at elevated temperatures (80°C, 5 hours). A copolymer in the form of a brown, stiff material was obtained.
when using a functional lignin according to the present invention and an endo cyclopentadiene as a monomer for copolymerization.

For this ring opening metathesis polymerization of functionalized lignin, prepared according to examples I and II, with dicyclopentadiene a commercially available ruthenium initiator is required as a catalyst. Used was Umicore M2^{®} ([1,3-Bis(2,4,6-trimethylphenyl)-2-imidazolidinylidene]dichloro-(3-phenyl-1H-inden-1-ylidene)(tricyclohexylphosphine)ruthenium(II), CAS Reg.No. 536724-67-1).

## Claims

1. Method of functionalizing lignin, comprising subjecting lignin to reaction with a compound which enables the introduction of at least one, non-aromatic C-C double bond into the lignin, especially into a monomeric sub-unit of the lignin, wherein beside at least one non-aromatic C-C double bond an aliphatic moiety comprising 8 to 22 carbon atoms particularly of 11 to 22 carbon atoms, is introduced into the lignin, in particular wherein an aliphatic moiety is derived from an aliphatic compound comprising an appropriate functional group for the esterification of free hydroxy groups of the lignin, especially a saturated or unsaturated fatty acid of 8 to 22, particularly of 11 to 22 carbon atoms.

2. Functionalized lignin suitable for copolymerization with appropriate monomers via ring opening metathesis polymerization, wherein at least one aliphatic moiety comprising 8 to 22 carbon atoms and at least one non-aromatic C-C double bond is introduced into the lignin, optionally obtainable or obtained according to a method of claim 1.

3. Functionalized lignin according to claim 2, wherein the aliphatic moiety is derived from a long-chain aliphatic compound, especially a saturated or unsaturated fatty acid of 8 to 22, particularly of 11 to 22 carbon atoms.

4. Functionalized lignin, according to any one of claims 2 or 3, wherein the aliphatic moiety is derived from an aliphatic compound comprising an appropriate functional group for the esterification of free hydroxy groups of the lignin.

5. Functionalized lignin according to any one of claims 2 to 4, wherein the lignin for functionalization is obtained from lignocellulosic material
(i) by pulping lignocellulosic material with alcohol, water and a base, at a temperature below 100°C, wherein 3 to 12 parts of base are used per 100 parts of the dry lignocellulosic material to be pulped, to obtain lignin in solution,
optionally wherein the alcohol in the pulping liquid is present in an amount of 70% v/v bis 95% v/v and a pH of 12 to 14 is adjusted,
(ii)- optionally subjecting lignin obtained by the pulping process to protease treatment,
(iii) optionally subjecting the aqueous, alcoholic alkaline solution obtained in any of (i) or (ii) to nanofiltration, to obtain a retentate which is a solution enriched with lignin compared with the permeate, wherein lignin is diminuished.

6. Functionalized lignin which is soluble in non-polar media and which carries groups appropriate for copolymerization, in particular lignin obtained or obtainable according to a method of any one of claims 1 and/or 5.

7. Functionalized lignin according to any one of claims 2 to 6, comprising sub-units of formula 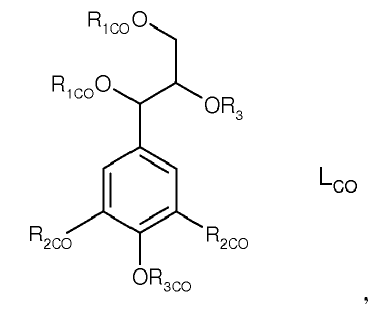 wherein
R_{1CO} is hydrogen or a group of formula 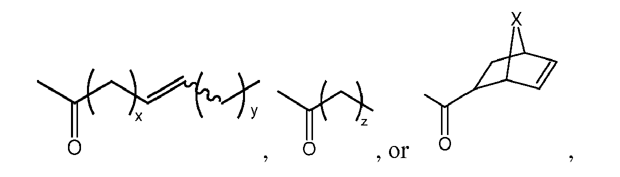 R_{2CO} is H, OCH₃ or another lignin subunit, R_{3CO} is H, or another lignin subunit,
X is CH₂, O or C=C(CH₃)₂,
x is 1 to (at least) 19,
y is 0 to (at least) 19,
z is 0 to (at least) 19, with the proviso that x plus y is (at least) 19.

8. The use of a functionalized lignin according to any one of claims 2 to 7 for (co)polymerization.

9. The use according to claim 8, wherein (co)polymerization is a ring opening metathesis (co)polymerization.

10. The use according to any one of claims 9 or 10, wherein a cyclic alkene, especially a cyclic diene is used as a monomer for copolymerization.

11. The use according to claim 10, wherein a cyclic alkene is a compound of formula 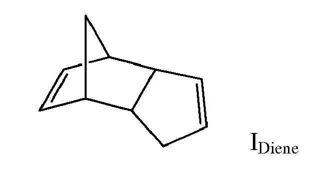 or of formula 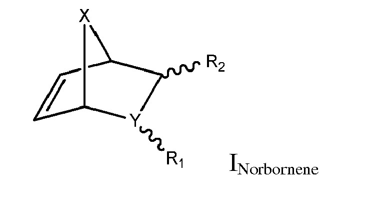 wherein
X is CH₂, C=C(CH₃)₂ or O,
Y is CHR₂, or NR₃,
R₁ and R₂ independently of each other are H, O(CH₂)ₙCH₃, C(O)(CH₂)ₙCH₃, C(O)O(CH₂)ₙCH₃, (CH₂)ₙCH₃, (CH₂)ₙCH=CH(CH₂)ₘCH₃,
R₃ is CH₂-phenyl, (CH₂)ₙCH₃ or (CH₂)ₙCH=CH(CH₂)ₘCH₃),
with the proviso that R₂ is different from R₃,
and
n and m are 0 to20.

12. A (co)polymer obtained or obtainable by (co)polymerization of a functionalized lignin of any one of claims 1 to 7 via a ring opening metathesis (co)polymerization.

13. A (co)polymer comprising functionalized lignin of any one of claims 2 to 7 reacted with a cyclic monomeric alkene or heteroalkene or diene, especially a diene, in particular a compound of formula I_{Diene} or I_{Norbornene}, as defined in claim 11, wherein X, R₁, R₂, m and n are as defined in claim 11, via a ring opening metathesis copolymerization.

14. A copolymer of any one of claims 12 or 13 which is a plastic-like fabric, especially having thermoset characteristics.
